Europäisches Patentamt

European Patent Office

Office européen des brevets

(11) Publication number: **0 290 286 B1**

## EUROPEAN PATENT SPECIFICATION

(45) Date of publication of patent specification: **05.08.92**   (51) Int. Cl.5: **C01B  17/04**

(21) Application number: **88304147.7**

(22) Date of filing: **06.05.88**

(54) **Method for recovering sulfur from H2S-containing gas streams.**

(30) Priority: **07.05.87 GB 8710828**

(43) Date of publication of application:
**09.11.88 Bulletin  88/45**

(45) Publication of the grant of the patent:
**05.08.92 Bulletin  92/32**

(84) Designated Contracting States:
**AT BE DE FR IT NL SE**

(56) References cited:
**DE-A- 2 122 000**
**US-A- 3 681 024**
**US-A- 4 552 747**

(73) Proprietor: **The BOC Group plc**
**Chertsey Road**
**Windlesham Surrey GU20 6HJ(GB)**

(72) Inventor: **Watson, Richard William**
**1 Woodlands Grove**
**Ilkley West Yorkshire LS29 9BX(GB)**

(74) Representative: **Wickham, Michael et al**
**c/o Patent and Trademark Department The**
**BOC Group plc Chertsey Road**
**Windlesham Surrey GU20 6HJ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to the treatment of gas streams comprising hydrogen sulphide.

Gas streams comprising hydrogen sulphide are typically produced as waste products or by-products from many industrial processes. For example, acid gas streams comprising carbon dioxide and hydrogen sulphide are typically produced during oil refinery operations in which sulphur is removed from crude oil. It is necessary to treat such hydrogen sulphide- containing streams before discharging them to the atmosphere so as to reduce or remove altogether their content of sulphur-containing gases. One well known, widely practised process for treating a gas stream comprising hydrogen sulphide is the Claus process. This process is based on the reaction between hydrogen sulphide and sulphur dioxide to form sulphur vapour and water vapour in accordance with the equation.

$$SO_2 + 2H_2S = 2H_2O + 3S$$

Sulphur exists in the vapour phase in a number of different molecular species such as $S_2$, $S_6$ and $S_8$ according to the temperature.

The first stage of the Claus process is to burn approximately a third of the hydrogen sulphide in the incoming gas stream to form sulphur dioxide and water vapour in accordance with the equation:

$$2H_2S + 3O_2 = 2H_2O + 2SO_2$$

This combustion reaction takes place in a suitable furnace and normally air is used as the source of oxygen for the purposes of combustion. The furnace is designed such that reaction between the sulphur dioxide and hydrogen sulphide can start in the combustion zone and then continue downstream of the combustion zone. It is however a feature of the Claus reaction that at the temperature that is created by the combustion of hydrogen sulphide, it is not possible to convert more than about 75% of the remaining hydrogen sulphide to sulphur by reaction with sulphur dioxide, and typically between 50 to 70% of the hydrogen sulphide is so converted. It is however possible to achieve a higher percentage conversion in the presence of a catalyst at a reaction temperature in the order of 200 to 350°C by reacting the remaining hydrogen sulphide and sulphur dioxide. (At such "catalytic" temperatures, the lower the temperature the higher is the percentage conversion that is achieved). Accordingly, after the gases pass out of the so-called thermal region of the furnace they are cooled to a temperature at which the sulphur that is formed in the furnace condenses. The sulphur is thus recovered. The gases are then reheated to a temperature suitable for the performance of a catalysed reaction between hydrogen sulphide and sulphur dioxide, such temperature typically being in the order of 200°C A catalytic reaction is then carried out and typically about 60% of the remaining hydrogen sulphide is converted to sulphur. Nonetheless, it is still not possible to achieve 100% conversion as in practice conversions of more than 99.5% can be achieved only at a temperature at which the sulphur vapour condenses and thereby substantially reduces the effectiveness of the catalyst. It is therefore typical to perform the catalytic oxidation of hydrogen sulphide with sulphur dioxide in more than one stage with first condensation of sulphur vapour and then re-heating of the hydrogen sulphide bearing gas stream being carried out between each stage.

Various means may be employed to effect reheating of the gases prior to each catalytic stage. For example, a small part of the feed gas mixture can be diverted from upstream of the furnace and burnt in in-line burners completely to sulphur dioxide, there being typically one such burner upstream of each catalytic reactor. The hot, sulphur dioxide-containing gases are then mixed with the main gas stream upstream of each respective catalytic reactor so as to effect reheating. Alternatively, a part of the main gas stream can be taken from, say, a waste heat boiler used to cool the main gas stream leaving the furnace and used in the same manner as the gas from the in-line burners. Another alternative is to employ indirect heat exchange with, for example steam to effect reheating. Typically, after two or three such stages, sulphur formed in the most downstream stage is condensed out of the gas stream which is then passed to a tail gas clean-up process of a known kind for handling relatively dilute hydrogen sulphide streams (for example the Scot, Beavon or Stretford process) or which is then incinerated.

Many variations on this basic Claus process are possible. Some of these alterations are summarised in the paper "Sulfur Costs vary with Process Selection" by H. Fischer, Hydrocarbon Processing, March 1979, pp125 to 129.

Recently, there has been a trend towards using crude oils of relatively high sulphur contents and also a trend towards stricter environmental standards so far as the discharge to the atmosphere of sulphur-containing gases is concerned, thus requiring an increased number of hydrogen sulphide bearing streams to be treated and hence more treatment capacity for hydrogen sulphide containing gases. For example, where possible, it is desirable to increase the rate at which an existing Claus plant is able to produce sulphur. In practice, the ability of such plants to handle an increased throughput of hydrogen sulphide containing gas is limited. It has been realised that in order to supply the necessary oxygen for combustion, approximately 14 volumes of air are required for each six volumes of hydrogen sulphide in the gas mixture. It has been proposed in for example a paper entitled "Oxygen Use in Claus Sulphur Plants" by M.R. Gray and W.Y. Svrcek, 1981 Gas Conditioning Conference, Oklahoma, 1981 and in a paper entitled "Modifications Jump Sulphur Recovery Plant Capacity", Oil and Gas Journal, August 20th 1984, pp108 to 112, that the capacity of existing Claus processes can be increased by substituting some commercially pure oxygen for air and thereby reducing the proportion of nitrogen in the gas mixture that flows through the process. In practice, however, in many plants, the amount of uprating that can be achieved by this method is limited as there is a tendency for the reduced volume of nitrogen to lead to higher exit temperatures from the furnace that cannot be withstood by the waste heat boiler or heat exchanger associated with the furnace or by the refractory lining of the furnace. Indeed, the more concentrated (in hydrogen sulphide) the gas stream, the less is the possibility for achieving any significant uprating, such possibility often becoming particularly limited for feed gas streams including 80% by volume or more of hydrogen sulphide. Another proposal for using pure oxygen in the Claus process is set out in US patent specification 3 681 024 and its corresponding Canadian patent specification 854094. These patent specifications disclose burning one third of a hydrogen sulphide stream with oxygen of about 95% purity. Plant effluent from a one or two catalytic reactor unit is sent to a water scrubber to reduce the water content of the effluent, and a sufficient amount of the scrubber off-gas is recycled to dilute the oxygen feed so that the furnace temperature is essentially equivalent to that obtained in operation with air.

This process is stated to have the advantage of enabling plant size to be reduced. However, existing plants constructed with the intention of using air to support the combustion of the hydrogen sulphide are not readily convertible to perform the process described in US patent specification 3 681 024 and this process has not found commercial favour. Moreover, the practice of recycling to the thermal reaction zone a gas mixture that has passed there through places a limitation on the amount by which the size of the furnace defining the thermal reaction zone can be reduced, particularly if the incoming hydrogen sulphide stream contains more than, say, 50% by volume of hydrogen sulphide. US patent specifications 3 331 733 and 4 552 747 are other examples of proposals in which gas is recirculated in order to moderate the temperature in the thermal reactor.

In oil refineries two hydrogen sulphide bearing waste gas streams are typically formed. One is known as the amine gas. Amine gas is gas recovered by an amine absorption and regeneration unit as typically used in a refinery to recover hydrogen sulphide from refinery gases. The amine gas may additionally include hydrogen sulphide rich gas recycled from a Claus plant tail gas clean-up unit or other source. The amine gas typically includes in the order of 90% by volume of hydrogen sulphide. The other gas is known as the sour water stripper gas. Sour water stripper gas is the gas generated by the stripping of $H_2S$, ammonia and hydrocarbons from contaminated water as typically performed on a refinery. Sour water stripper gas typically includes a much smaller proportion of hydrogen sulphide, say, less than 40%, but in addition an appreciable proportion of ammonia, sometimes up to 40% by volume or more. Another stream containing sulphur dioxide from for example a flue gas desulphurisation unit may if available also be combined with the sour water stripper gas. In conventional practice, the sour water stripper gas and the amine gas are mixed together to form the gas mixture entering the reaction furnace of the Claus process.

It is an aim of the present invention to provide an improved method for recovering sulphur from hydrogen sulphide which is capable of minimising the volumes of "ballast" gas such as nitrogen that flow through the sulphur recovery process, and in which a first stream of hydrogen sulphide containing gas is treated for part of the process separately from a second stream of hydrogen sulphide gas of a different composition from the first stream.

According to the present invention there is provided a method of recovering sulphur from gas mixtures including hydrogen sulphide comprising passing a first gas stream including hydrogen sulphide into a first combustion region in which at least 50% of the hydrogen sulphide content of the first stream is burned to form sulphur dioxide and water vapour, and then cooling the first stream, burning in a second combustion region less than one third of the hydrogen sulphide content of a second gas stream including hydrogen sulphide to form sulphur dioxide and water vapour, supporting the combustion of hydrogen sulphide in both the first and the second combustion regions with oxygen or oxygen-enriched air, reacting hydrogen sulphide with sulphur dioxide in a thermal reaction region associated with the second combustion region to form sulphur vapour and water vapour, extracting such sulphur vapour from the resulting gas mixture, and reacting the residual hydrogen sulphide in the gas mixture with residual sulphur dioxide to form further sulphur vapour and water vapour and then extracting the further sulphur vapour, wherein at least part of the cooled first stream is introduced into the second combustion region or the thermal region associated therewith (or both), and the first stream has a different composition from the second stream.

Preferably, substantially all the hydrogen sulphide content of the first stream is burnt to form sulphur dioxide and water vapour.

Typically, the reaction between the residual hydrogen sulphide in the gas mixture with the residual sulphur dioxide is conducted over a catalyst. A suitable quantity (generally about one third) of the total hydrogen sulphide content of the first and second streams is burnt in the respective combustive regions for the mol ratio of hydrogen sulphide to sulphur dioxide in the gas mixture entering the catalytic stage to be about 2 to 1.

Preferably, the first gas stream comprises amine gas and the second gas stream a mixture of amine gas and sour water stripper gas. Alternatively, the first gas stream may comprise sour water stripper gas and the second gas stream a mixture of amine gas and sour water stripper gas.

Preferably, only part of the cooled first gas stream is passed to the second combustion region and/or the thermal reaction region associated therewith, the remainder being returned to the first gas stream. Instead of such recycling of part of the first gas stream to the first combustion region, an external moderator such as liquid water may be introduced into the first combustion region so as to control the temperature therein.

The method according to the invention may be performed on a plant built to custom for this purpose. It is however also possible to perform the method according to the invention on an existing plant for performing the Claus process, with a need only for some minor modifications to the plant. Thus, an existing Claus furnace can be employed to provide the second combustion region and its associated thermal reaction region in the method according to the invention and the first combustion region, a suitable heat exchanger and typically a recycle fan may be retro-fitted to the existing plant. Recycling some of the colled gas to the first combustion region makes necessary the use of a larger furnace defining the first combustion region than if liquid water is employed as a moderator, but offers the benefit of making possible an enhanced uprating of the Claus furnace. In some examples according to the invention we have calculated that it is possible to increase throughput of an existing Claus plant more than two-fold by adapting it to perform the method according to the invention.

The method according to the present invention will now be described by way of example with reference to the accompanying drawings, of which:

Figure 1 is a schematic diagram illustrating a first plant for use in performing method according to the invention, and

Figure 2 is a schematic diagram illustrating a second plant for use in performing method according to the invention, and

Figure 3 is a schematic diagram of a treatment plant which can be added to either the plant shown in Figure 1 or the one shown in Figure 2 to perform the method according to the invention.

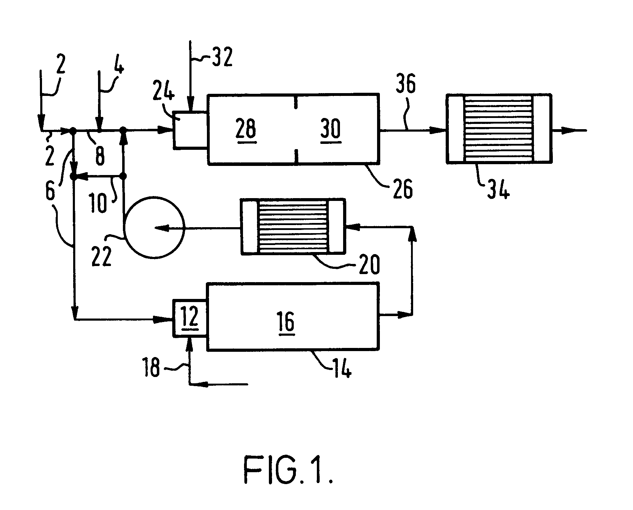

Referring to Figure 1 of the drawings, amine gas is passed along a conduit 2 and sour water stripper gas along a conduit 4 which extends in parallel with part of the conduit 2. The conduit 2 terminates in a union between a pipeline 6 and a pipeline 8. A minor proportion of the amine gas passes into the pipeline 6 and the remainder into the pipeline 8 in which the conduit 4 terminates. Thus, a first gas stream comprising amine gas and a second gas stream comprising a mixture of amine gas and sour water stripper gas are formed.

Considering firstly the flow of the first gas stream, this gas stream is mixed with moderating gas at a union of the pipeline 6 with a pipeline 10 for moderating gas. The formation of moderating gas will be described below. The mixture is passed to a burner 12 that fires into a furnace 14 defining a first combustion region 16. The burner 12 is also supplied with pure oxygen through an inlet 18.

In the first combustion region 16 most or all of the hydrogen sulphide and all of the hydrocarbon content of the gas entering the burner 12 is fully combusted with the result that sulphur dioxide, water vapour and carbon dioxide are formed. The mixing of the moderating gas with the first gas stream ensures that an excessive temperature is not created inside the furnace 14. Typically, the gases may exit the furnace 14 at a temperature in the region of 1250°C. The resulting gases will typically comprise a mixture of sulphur dioxide, water vapour and carbon dioxide when stoichiometric combustion is performed but when the combustion is sub-stoichiometric some hydrogen sulphide and sulphur vapour will also be present. The gases are then cooled in a heat exchanger 20 which they exit typically at a temperature of not more than 300°C. Normally, a fan 22 is operated to ensure that the flow of gas out of the furnace 14 through the heat exchanger 20 and to distribute one part of this gas to the conduit 10 (such part of the gas thus forming the moderating gas) and the remainder of the gas to the pipeline 8 at a region downstream of the union of the pipeline 8 with the conduit 4.

A mixture of the second gas stream and the gas passed from the heat exchanger 20 into the second gas stream flows into a burner 24 which fires into a second furnace 26 defining a second combustion region 28 and a thermal reaction region 30. In the combustion region 28 some of the hydrogen sulphide is combusted to water vapour and sulphur dioxide. Ammonia present in the gas entering the combustion region 28 is oxidised to nitrogen and water vapour and hydrocarbon present to water vapour and carbon dioxide. In order to effect the combustion, pure oxygen is supplied to the burner 24 through an inlet 32 at a rate such that ammonia and any hydrocarbon present in the gas mixture entering the second combustion region is fully oxidised and such that the mole ratio of hydrogen sulphide to sulphur dioxide in the resulting combustion products is in the order of 2 to 1.

Reaction between hydrogen sulphide and sulphur dioxide takes place in the furnace 26, particularly the thermal reaction region 30. Reaction between hydrogen sulphide and sulphur dioxide is such that about 50 to 70% of the hydrogen sulphide in the total amine gas and sour water stripper gas is converted to sulphur by the time the gas exiting the furnace 26 enters a waste heat boiler 34 that communicates with an outlet 36 from the furnace 26. Typically, the gas leaves the furnace 26 at a temperature in the range 1350 to 1650°C, preferably 1400-1550°C and exits the waste heat boiler 34 at a temperature of 315°C.

In one example of the operation of the plant shown in Figure 1, an amine gas consisting of 89% by volume of hydrogen sulphide, 5% by volume of water vapour, 5% by volume of carbon dioxide and 1% by volume of ethane flows into the conduit 2 at a rate of 200 Kmol/hour and at a temperature of 43.3°C and a sour water stripper gas consisting of 26% by volume of hydrogen sulphide, 30% by volume of water vapour, 43% by volume of ammonia and 1% by volume of ethane flows into the conduit 4 at a rate of 209.01 Kmol/hour and at a temperature of 82.2°C. 74.65 Kmol/hour of the amine gas is employed to form a first gas stream and is passed through pipeline 6 and mixed with 525.14 Kmol/hour of moderating gas supplied from the conduit 10. The resultant gas mixture is passed at a rate of 599.79 Kmol/hour into the burner 12 and it is burnt in the combustion region 16 with 102.27 Kmol/hour of pure oxygen. As a result the combustion, a gas mixture comprising 50.26% by volume of water vapour, 46.12% by volume of sulphur dioxide and 3.62% by volume of carbon dioxide is formed. This gas mixture is cooled from 1250°C to 300°C in the heat exchanger 20 and 525.14 Kmol/hour are used to form the moderating gas while the remainder (144.07 Kmol/hour) is mixed with the sour water stripper gas in the pipeline 8 and the remaining 125.38 Kmol/hr of amine solution.

The resulting mixture is passed to the burner 24 and is burnt in the second combustion region 26 in the presence of the pure oxygen which is supplied to the burner 24 at a rate of 90.86 Kmol/hour. Nitrogen, water vapour, carbon dioxide and sulphur dioxide are formed as a result of the combustion and there is reaction between sulphur dioxide and hydrogen sulphide in the thermal reaction region 30 to form sulphur vapour and thermal water vapour. Typically, more than 50% but less than 55% of the hydrogen sulphide content of the amine gas and sour water stripper gas is thus converted to sulphur vapour and the gas mixture leaving the waste heater boiler 34 at a rate of 570.50 Kmol/hour has (excluding sulphur vapour) the following composition, by volume, $H_2$ 1.664% ; $N_2$ 8.118% ; CO 0.060% ; $CO_2$ 2.204% ; $H_2S$ 11.836% ; COS 0.038% ; $SO_2$ 6.918% ; $CS_2$ 0.981% ; $H_2O$ 68.182%.

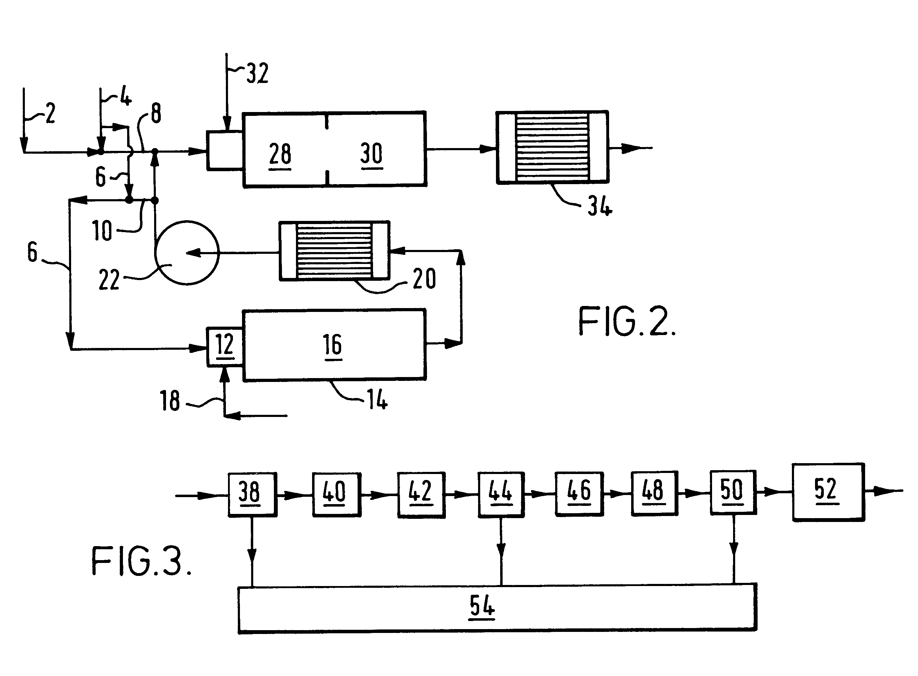

The plant shown in Figure 2 is substantially the same as that shown in Figure 1. The only difference is that the first gas stream is formed by taking a part of the sour water stripper gas from the conduit 4 rather than part of the amine gas from the conduit 2. Accordingly, the second gas stream comprises all the amine gas and part of the sour water stripper gas. Thus, in the plant shown in Figure 2, the pipeline 6 communicates with the pipeline 4 rather than the pipeline 2. In other respects the plant shown in Figure 2 is the same as that shown in Figure 1. Moreover, save for the flow rates and compositions of the gas mixtures, the operation of the plant shown in Figure 2 is the same as that shown in the Figure 1.

In a typical example of operation of the plant shown in Figure 2 amine gas comprising 89% by volume of hydrogen sulphide, 5% by volume of water Vapour, 5% by volume of carbon dioxide and 1% by volume of ethane is passed at a rate of 200 Kmol/hour at a temperature of 43.3°C into the conduit 2.

Sour water stripper gas, having a composition of 26% by volume of hydrogen sulphide, 30% by volume of water, 43% by volume of ammonia, and 1% by volume of ethane is passed at a rate of 209.01 Kmol/hour at a temperature of 82.2°C into the conduit 4. A part of this sour water stripper gas is taken (at a rate of 122.71 Kmol/hour) to form the first gas stream. The remainder (86.30 Kmol/hour) is mixed with the amine gas to form the second gas stream. The first gas stream is mixed with moderating gas supplied to the conduit 10 at a rate of 536.02 Kmol/hour and the resultant mixture is passed at a rate of 658.73 Kmol/hour to the burner 12 and is burnt in the combustion region 16. 91.58 Kmol/hour of oxygen is supplied to the burner 12 to support combustion in the combustion region 16. In the combustion region 16, all the hydrogen sulphide entering the burner 12 is fully oxidised to water vapour and sulphur dioxide, all the ethane to carbon dioxide and water vapour, and all the ammonia to nitrogen and water vapour. The resulting gas leaves furnace 14 at a rate of 749.89 Kmol/hour and at a temperature of 1250°C and is cooled to about 300°C in the heat exchanger 20. 536.03 Kmol/hour of the cooled gas mixture is employed as the aforesaid moderating gas while the remaining 211.81 Kmol/hour is mixed with the gases in the pipeline 8 and the resulting mixture is passed to the burner 24. The burner 24 fires into the combustion region 28 where all of the ammonia and all of the ethane are fully oxidised to nitrogen and water vapour and carbon dioxide and water vapour respectively and sufficient hydrogen sulphide is fully oxidised to sulphur dioxide and water vapour for the mole ratio of hydrogen sulphide to sulphur dioxide in the resulting gas mixture to be in the order of 2 to 1.

Reaction takes place between the hydrogen sulphide and sulphur dioxide, particularly in the thermal reaction region 30. From 60 to 65% of the hydrogen sulphide in the incoming gas streams is thus converted to sulphur and 565.54 Kmol/hour of gas leaves the waste heat boiler 34 at about 1450°C This gas, excluding sulphur vapour, has the following composition, by volume, $H_2$ 2.040% ; $N_2$ 8.233% ; CO 0.122% ; $CO_2$ 2.183% ; $H_2S$ 9.142% ; COS 0.070% ; $SO_2$ 5.562% ; $CS_2$ 0.956% ; $H_2O$ 71.690%.

Since, in operation, the gas leaving the plant shown in Figures 1 and 2 contains a considerable proportion of sulphur containing gases (hydrogen sulphide and sulphur dioxide) further treatment is required. This treatment is performed in the plant shown in Figure 3 which communicates with the outlet of the waste heat boiler 34 of either of the plants shown in Figure 1 and Figure 2. The plant shown in Figure 3 includes a first sulphur condenser 38 which is operated to condense out of the gas mixture all the sulphur vapour and pass it to a sulphur seal pit 54. Gas mixture exits the condenser 38 at a temperature of about 140°C and is then re-heated in a heat exchanger 40 to a temperature in the range of 220-250°C. Re-heating can be effected by any of the means known in the art. The re-heated gas mixture is then passed through a catalytic reactor 42 in which reaction takes place between residual hydrogen sulphide and sulphur dioxide to form further sulphur vapour and water vapour. This reaction takes place over a catalyst which is typically of a conventional kind, for example, an activated alumina. Since the catalytic reaction between hydrogen sulphide and sulphur dioxide needs lower temperatures at these lower temperatures is exothermic, there is a rise in the temperature in the first catalytic reactor 42 and accordingly the gas mixture leaving this reactor 42 typically has a temperature in the order of 300-350°C.

A higher outlet temperature would tend to give improved hydrolysis of any carbon oxysulphide and carbon disulphide present in the gas mixture entering the reactor 42.

From the catalytic reactor 42, the gas mixture passes through a second sulphur condenser 44 in which the sulphur is condensed out of the gas mixture. The resultant sulphur condensate is passed to the sulphur seal pit 54. Downstream of the sulphur condenser 44 the gas mixture is re-heated in a heat exchanger 46 from a temperature of say 140°C to a temperature in the range, say, of 200-220°C. The gas stream then passes through a second catalytic reactor 48 where further reaction takes place between residual hydrogen sulphide and residual sulphur dioxide to form water vapour and sulphur vapour with the evolution of heat such that the temperature is typically raised in the order of 50°C as it passes from the inlet to the outlet of the catalytic reactor 48. The catalyst employed in the second catalytic reactor is typically the same as that employed in the first catalytic reactor. After leaving the second catalytic reactor 48, the gas mixture passes through a third sulphur condenser 50 which sulphur is condensed out of the gas stream. Sulphur condensate is passed to the sulphur seal pit 54. The gas stream leaves a third sulphur condenser 50 and may if desired pass to a further series of reheat, catalytic reaction and condensation stages (not shown) or, as shown, may enter a tail gas clean up plant 52 in which residual sulphur compounds are removed and from which a 'clean' gas stream is vented to the atmosphere. The tail gas clean up plant 52 may be of a conventional kind.

## Claims

1. A method of recovering sulphur from gas mixtures including hydrogen sulphide comprising passing a first gas stream including hydrogen sulphide into a first combustion region in which at least 50% of the hydrogen sulphide content of the first stream is burned to form sulphur dioxide and water vapour, and then cooling the first stream, burning in a second combustion region less than one third of the hydrogen sulphide content of a second gas stream including hydrogen sulphide to form sulphur dioxide and water vapour, supporting the combustion of hydrogen sulphide in both the first and the second combustion regions with oxygen or oxygen-enriched air, reacting hydrogen sulphide with sulphur dioxide in a thermal reaction region associated with the second combustion region to form sulphur vapour and water vapour, extracting such sulphur vapour from the resulting gas mixture, and reacting the residual hydrogen sulphide in the gas mixture with residual sulphur dioxide to form further sulphur vapour and water vapour and then extracting the further sulphur vapour, wherein at least part of the cooled first stream is introduced into the second combustion region or the thermal region associated therewith (or both), and the first stream has a different composition from the second stream.

2. A method as claimed in claim 1, in which the first gas stream comprises amine gas and the second gas stream comprises a mixture of sour water stripper gas and amine gas.

3. A method as claimed in claim 1, in which the first gas stream comprises sour water stripper gas and the second gas stream comprises a mixture of sour water stripper gas and amine gas.

4. A method as claimed in any one of the preceding claims, in which only part of the cooled first gas stream is passed to the second combustion region, the remainder being returned to the first gas stream.

5. A method as claimed in any one of claims 1 to 3, in which liquid water is passed into the first combustion region to control the temperature therein.

6. A method as claimed in any one of the preceding claims in which all the hydrogen sulphide content of the first gas stream is fully oxidised to water vapour and sulphur dioxide in the first combustion region.

7. A method as claimed in any one of the preceding claims in which the reaction between the residual sulphur dioxide and the residual hydrogen sulphide is conducted over catalyst.

**Revendications**

1. Méthode d'obtention de soufre à partir de mélanges gazeux comprenant du sulfure d'hydrogène, la méthode comprenant l'introduction d'un premier courant gazeux, comportant du sulfure d'hydrogène, dans une première région de combustion dans laquelle au moins 50 % du sulfure d'hydrogène contenu dans le premier courant sont brûlés pour former du bioxyde de soufre (anhydride sulfureux) et de la vapeur d'eau, puis le refroidissement du premier courant, la combustion dans une seconde région de combustion de moins d'un tiers du sulfure d'hydrogène contenu dans un second courant gazeux comportant du sulfure d'hydrogène afin de former du bioxyde de soufre et de la vapeur d'eau, l'entretien de la combustion du sulfure d'hydrogène, dans la première ainsi que dans la seconde région de combustion, par de l'oxygène ou par de l'air enrichi en oxygène, la réaction du sulfure d'hydrogène avec le bioxyde de soufre dans une région de réaction thermique associée à la seconde région de combustion pour former de la vapeur de soufre et de la vapeur d'eau, l'extraction de cette vapeur de soufre du mélange gazeux résultant, et la réaction du sulfure d'hydrogène résiduel dans le mélange gazeux avec du bioxyde de soufre résiduel pour former un supplément de vapeur de soufre et de vapeur d'eau puis l'extraction de ce supplément de vapeur de soufre, méthode dans laquelle au moins une partie du premier courant, refroidi, est introduite dans la seconde région de combustion ou la région thermique associée à cette seconde région de combustion (ou dans les deux), et le premier courant a une composition différente de celle du second courant.

2. Méthode telle que revendiquée à la revendication 1, dans laquelle le premier courant gazeux comprend un gaz de type amine et le second courant gazeux comprend un mélange de gaz de stripage d'une eau acide (contenant des produits soufrés) et de gaz de type amine.

3. Méthode telle que revendiquée à la revendication 1, dans laquelle le premier courant gazeux comprend du gaz de stripage d'une eau acide et le second courant gazeux comprend un mélange de gaz de stripage d'une eau acide et de gaz de type amine.

4. Méthode telle que revendiquée dans l'une quelconque des revendications précédentes, dans laquelle on ne fait passer dans la seconde région de combustion qu'une partie du premier courant gazeux refroidi, le reste étant renvoyé au premier courant gazeux.

5. Méthode telle que revendiquée dans l'une quelconque des revendications 1 à 3, dans laquelle on introduit de l'eau liquide dans la première région de combustion afin d'y maîtriser la température.

6. Méthode telle que revendiquée dans l'une quelconque des revendications précédentes, dans laquelle la totalité du sulfure d'hydrogène contenu dans le premier courant gazeux est entièrement oxydée en vapeur d'eau et en bioxyde de soufre dans la première région de combustion.

7. Méthode telle que revendiquée dans l'une quelconque des revendications précédentes, dans laquelle on conduit la réaction entre le bioxyde de soufre résiduel et le sulfure d'hydrogène résiduel en faisant réaliser cette réaction sur un catalyseur.

**Patentansprüche**

1. Verfahren zur Gewinnung von Schwefel aus Schwefelwasserstoff einschließenden Gasgemischen, umfassend das Durchleiten eines ersten, Schwefelwasserstoff einschließenden Gasstromes in einem ersten Verbrennungsbereich, in welchem wenigstens 50% des Schwefelwasserstoffgehaltes des ersten Stromes unter Bildung von Schwefeldioxid und Wasserdampf verbrennt werden, und dann das Abkühlen des ersten Stromes, das Verbrennen von weniger als einem Drittel des Schwefelwasserstoffgehaltes eines zweiten, Schwefelwasserstoff einschließenden Gasstromes unter Bildung von Schwefeldioxid und Wasserdampf in einem zweiten Verbrennungsbereich, das Fördern der Verbrennung von Schwefelwasserstoff sowohl in dem ersten als auch in dem zweiten Verbrennungsbereich mit Sauerstoff oder Sauerstoff-angereicherter Luft, die Umsetzung von Schwefelwasserstoff mit Schwefeldioxid in einem mit dem zweiten Verbrennungsbereich verbundenen thermischen Reaktionsbereich zur Bildung von Schwefeldampf und Wasserdampf, die Extraktion dieses Schwefeldampfes aus dem erhaltenen Gasgemisch und die Umsetzung des rückständigen Schwefelwasserstoffs in dem Gasgemisch mit rückständigem Schwefeldioxid zur Bildung von weiterem Schwefeldampf und Wasserdampf und dann die Extraktion des weiteren Schwefeldampfes, wobei wenigstens ein Teil des gekühlten ersten Stromes in den zweiten Verbrennungsbereich oder den hiermit verbundenen thermischen Bereich (oder beide) eingeführt wird und der erste Strom eine von dem zweiten Strom verschiedene Zusammensetzung besitzt.

2. Verfahren nach Anspruch 1, in welchem der erste Gasstrom Amingas umfaßt, und der zweite Gasstrom eine Mischung von Sauerwasserabstreifgas und Amingas umfaßt.

3. Verfahren nach Anspruch 1, in welchem der erste Gasstrom Sauerwasserabstreifgas umfaßt, und der zweite Gasstrom eine Mischung von Sauerwasserabstreifgas und Amingas umfaßt.

4. Verfahren nach einem der vorhergehenden Ansprüche, bei welchem nur ein Teil des gekühlten, ersten Gasstromes zu dem zweiten Verbrennungsbereich geführt wird, wobei der Rest zu dem ersten Gasstrom rückgeführt wird.

5. Verfahren nach einem der Ansprüche 1 bis 3, in welchem flüssiges Wasser in den ersten Verbrennungsbereich zur Steuerung der Temperatur hierin geführt wird.

6. Verfahren nach einem der vorhergehenden Ansprüche, in welchem der gesamte Schwefelwasserstoffgehalt des ersten Gasstromes vollständig zu Wasserdampf und Schwefeldioxid in dem ersten Verbrennungsbereich oxidiert wird.

7. Verfahren nach einem der vorhergehenden Ansprüche, in welchem die Reaktion zwischen dem restlichen Schwefeldioxid und dem restlichen Schwefelwasserstoff über Katalysator durchgeführt wird.

FIG.1.

FIG.2.

FIG.3.

EP 0 290 286 B1